# EUROPÄISCHE PATENTANMELDUNG

(11) **EP 4 679 305 A1**
(43) Veröffentlichungstag der Anmeldung: **14.01.2026**
(21) Anmeldenummer: 24188356.0
(22) Anmeldetag: 12.07.2024
(51) Int. Cl.: G06F 21/57, H04L 41/0806, H04L 9/40

(54) **EINBINDUNGSVERFAHREN ZUM EINBINDEN EINER CLIENTVORRICHTUNG IN EINE EINSATZUMGEBUNG, PRÜFINSTANZVORRICHTUNG, VERSIONSPRÜFEINRICHTUNG, EINSATZUMGEBUNG, CLIENTVORRICHTUNG, COMPUTERPROGRAMM UND ELEKTRONISCH LESBARER DATENTRÄGER**

(71) Anmelder: Siemens Aktiengesellschaft, 80333 München (DE)
(72) Erfinder: Aschauer, Hans, 81829 München (DE); Becker, Stefan, 91325 Adelsdorf (DE); Falk, Rainer, 85435 Erding (DE); Feist, Christian Peter, 80689 München (DE); Frank, Reinhard, 81369 München (DE); Laurig, Frank, 92369 Sengenthal (DE); Palmin, Anna, 76187 Karlsruhe (DE)
(74) Vertreter: Siemens Patent Attorneys

(57) **Zusammenfassung**

Die Erfindung betrifft ein Einbindungsverfahren zum Einbinden einer Clientvorrichtung (10) in eine Einsatzumgebung (40), wobei das Einbindungsverfahren ein Versionsüberprüfungsverfahren umfasst, das die folgenden Schritte umfasst. Übermittlung einer Versionsmitteilungsnachricht (12) durch die Clientvorrichtung (10) an eine Prüfinstanzvorrichtung (14) der Einsatzumgebung (40), wobei die Versionsmitteilungsnachricht (12) eine vorliegende Version eines auf der Clientvorrichtung (10) installierten Codes umfasst; - Überprüfen durch die Prüfinstanzvorrichtung (14), ob die vorliegende Version des auf der Clientvorrichtung (10) installierten Codes eine vorgegebene Zulässigkeitsbedingung in Bezug auf eine vorgegebene Zielversion des Codes erfüllt; Bei Erfüllung der Zulässigkeitsbedingung durch die vorliegende Version, Einleiten eines Verfahrens zum Einbinden der Clientvorrichtung (10) in die Einsatzumgebung (40) durch die Prüfinstanzvorrichtung (14); und bei Nichterfüllung der Zulässigkeitsbedingung durch die vorliegende Version, verweigern der Einbindung der Clientvorrichtung (10) in die Einsatzumgebung (40) durch die Prüfinstanzvorrichtung (14).

## Beschreibung

Die Erfindung betrifft ein Einbindungsverfahren zum Einbinden einer Clientvorrichtung in eine Einsatzumgebung, eine Prüfinstanzvorrichtung, eine Versionsprüfeinrichtung, eine Einsatzumgebung, welche eine Versionsprüfeinrichtung aufweist, eine Clientvorrichtung, ein Computerprogramm und einen elektronisch lesbaren Datenträger.

Ein Einbindungsverfahren, das auch als Secure Device Onboarding (SDO) bezeichnet wird, ist ein Verfahren zum sicheren Hinzufügen von Geräten in eine Einsatzumgebung, beispielsweise einem Netzwerk. Das Einbindungsverfahren dient dazu, sicherzustellen, dass nur autorisierte und zulässige Geräte in die Einsatzumgebung aufgenommen werden. Zu diesem Zweck umfasst das Einbindungsverfahren eine Überprüfung einer Identität und einer Originalität der Geräte. Durch die Verwendung des Einbindungsverfahrens kann sichergestellt werden, dass nur autorisierte Geräte auf das Netzwerk zugreifen können, um potenzielle Bedrohungen und Angriffe zu vermeiden. Nach erfolgtem Einbinden eines Gerätes kann sich das Gerät wiederholt mit der Einsatzumgebung verbinden, insbesondere kryptographisch geschützt verbinden, um wiederholt auf das Netzwerk zuzugreifen.

Geräte, die im OT-Bereich (OT: operation technology, Betriebstechnik) eingesetzt werden, haben zunehmend eine sichere digitale Identität (engl. Secure Device Identity bzw. Initial Device Identifier, kurz IDevID), die aus den folgenden Bestandteilen besteht:
▪ einem sog. Secret bzw. Private Key sowie
▪ einem zugehörigen IDevID-Zertifikat, das den zugehörigen Public Key beinhaltet, und
▪ die zugehörige Zertifikatskette (engl. Certificate Chain), die das Zertifikat der CA, die das IDevID-Zertifikat ausgestellt hat und als Issuing CA bezeichnet wird, sowie die Zertifikate der sog. Intermediate CAs, die sich zwischen der Issuing CA und der sog. Root CA, die als selbstsignierte CA als sog. Trust Anchor dient, beinhaltet.

Die Identität und die Originalität der Geräte kann nach dem aktuellen Stand der Technik anhand der oben beschriebenen sicheren digitalen Identität unter Verwendung geeigneter Verfahren wie z.B. ANIMA-BRSKI, BRSKI-AE, SZTP, FDO oder OPC UA Teil 21 im Rahmen der sog. Identitäts-/Originalitätsprüfung verifiziert werden, denn an den genannten Verfahren wird aktuell mit Hochdruck gearbeitet.

Ein Gerät im Auslieferungszustand (Factory State) hat immer einen bestimmten Stand des Betriebssystems und der Firmware. Es ist möglich, dass ein Gerät einige Tage, Wochen, Monate oder sogar Jahre in einem Lager eines Distributors, OEMs oder eines Endanwenders verbringt, bevor das Gerät in einer OEM- oder einer Endanwenderumgebung an ein Netzwerk angeschlossen und in Betrieb genommen wird.

Der aktuell jeweils bestehende Stand des Betriebssystems und der Firmware der Geräte wird im Rahmen dieser Prüfung in der Regel nicht mitgeprüft, was zu bestimmten Problemen, insbesondere fehlenden Funktionalitäten und/oder Sicherheitslücken führen kann. Beispielsweise ist jedes Gerät, das OpenSSL nutzt, prinzipiell in der Lage, den in eine bestimmte OpenSSL-Version integrierten Generic CMP Client zu nutzen. Durch diese Bibliothek wird ein automatisiertes Zertifikatsmanagement ermöglicht. Falls das Gerät eine ältere OpenSSL-Version hat, steht diese Funktionalität gegebenenfalls nicht zur Verfügung.

Ein anderes Beispiel ist die Unterstützung der bestimmten Typen der applikationsspezifischen Zertifikate. Beispielsweise kann ein Industrial Controller von Siemens mit einer bestimmten Firmware-Version nur ein OPC UA Server-Zertifikat nutzen, was insbesondere bedeutet, dass dieses OPC UA Server Zertifikat auf das Gerät unter Verwendung des OPC UA GDS Push-Mechanismus gebracht werden kann. Ein Industrial Controller mit dieser Firmware-Version lehnt jedoch ein TLS-Webserver-Zertifikat, das unter Verwendung des gleichen Push-Mechanismus auf das Gerät gebracht wird, ab.

Die nachfolgende Version der Firmware ermöglicht jedoch das Aufbringen des TLS-Webserver-Zertifikats. Somit sollte die nachfolgende Version zum Einsatz kommen, wenn der Wunsch und/oder die Anforderung besteht, dass der Zugriff auf das Web-Frontend des Industrial Controllers nur per HTTPS erfolgen darf und das dafür benötigte TLS-Webserver-Zertifikat über den GDS Push-Mechanismus auf das Gerät erstmalig gebracht und zur Laufzeit gemäß den gängigen beziehungsweise in der jeweilige Einsatzumgebung einzuhaltenden Vorgaben bezüglich der Gültigkeitsdauer der Zertifikate regelmäßig (z.B. alle zwei Monate) erneuert werden soll.

Weiterhin können veraltete Firmware-Versionen Schwachstellen aufweisen.

Auch wenn das Gerät in der jeweiligen OEM- oder Endanwenderumgebung betrieben wird, so wird in der Regel nicht darauf geachtet, ob der aktuelle Stand des Betriebssystems und der Firmware insbesondere im Hinblick auf die Cybersecurity angemessen beziehungsweise akzeptabel ist.

Zusammenfassend wird ein veralteter beziehungsweise nicht passender Stand des Betriebssystems und der Firmware heute weder entsprechend erkannt noch gemeldet.

Überdies wird auch nicht sichergestellt, dass in dem Fall, wenn doch erkannt wurde, dass der aktuell vorliegende Stand für die anvisierten Aufgaben des Gerätes und/oder im Hinblick auf Security nicht passt, ein Update des Betriebssystems und/oder der Firmware gegebenenfalls in Rücksprache und mit Mitwirkung des Benutzers oder vollautomatisiert, beispielsweise gemäß einer bestimmten Policy angestoßen wird. Auch falls ein Update möglicherweise nicht möglich ist, da dafür eine andere Hardware benötigt wäre, wird der Benutzer nach dem aktuellen Stand der Technik nicht darüber informiert. Dies führt häufig dazu, dass für die Inbetriebnahme der Geräte und das damit verbundene Troubleshooting viel Zeit aufgewendet wird, das jeweilige Gerät sich jedoch, zumindest im Auslieferungszustand, als ungeeignet für die anvisierten Aufgaben beziehungsweise im Hinblick auf die Security erweist.

Aus dem Stand der Technik ist bekannt, dass ein loT-Gerät automatisch seine Firmware aktualisieren soll. Dies ist in der europäischen Norm "Cyber Security for Consumer Internet of Things: Baseline Requirements" (ETSI EN 303 645) festgelegt. Die ETSI EN 303 645 beschreibt dies unter Provision 5.3-4 Automatic mechanisms should be used for software updates, und unter Provision 5.3-5 The device should check after initialization, and then periodically, whether security updates are available. In ETSI EN 303 645 ist Initialisierung wie folgt definiert: "initialization: process that activates the network connectivity of the device for operation and optionally sets authentication features for a user or for network access". Dadurch ist also bekannt, dass ein Gerät gemäß den in ETSI EN 303 645 aufgeführten Anforderungen nach Herstellung einer Netzwerkkonnektivität überprüfen soll, ob Security-Updates vorliegen. Die ETSI EN 303 645 definiert nur die Anforderungen, es gibt jedoch zusätzlich auch Hinweise, wie die Anforderungen umgesetzt werden können (ETSI TR 103 621).

Ferner ist es bekannt, dass die Firmware eines Geräts durch ein Gerätemanagementsystem aktualisiert werden kann. Dies ist beispielsweise in der Spezifikation "OMA DM Firmware Update Management Object", der Open Mobile Alliance, die sich an OMA DM-basierte mobile Geräte, beziehungsweise Wireless-Geräte richtet, beschrieben. Die in der Spezifikation dokumentierten Ansätze setzen jedoch eine direkte Kommunikation eines mobilen/Wireless-Gerätes mit einem sogenannten OMA DM Server, der von einem externen System über Updates informiert wird, voraus, was im OT-Bereich nicht immer möglich ist.

Von der Device Identifier Composition Engine (DICE) der Trusted Computing Group (TCG) ist bekannt, dass ein Gerät ein Geräteauthentisierungszertifikat (Alias Certificate) besitzen kann, das einen Identifier der Gerätefirmware (FWID) umfasst.

Die bekannten Spezifikationen des sogenannten Secure Device Onboarding nach dem aktuellen Stand der Technik wie z.B. ANIMA-BRSKI, BRSKI-AE, BRSKI-PRM, OPC UA Part 21 gehen heute auf die Überprüfung des Standes der Firmware und des Betriebssystems der Geräte, deren Identität/Originalität im Rahmen des Onboarding geprüft wird, nicht näher ein.

Dabei gibt es aktuell drei mögliche Geräte-Kategorien hinsichtlich der Fähigkeiten/Möglichkeiten, die ein OT-Gerät (das nicht notwendigerweise durch ein mobiles Wireless-Gerät, das im Scope des unter Punkt 2 genannten OMA DM-Standard ist, repräsentiert wird) bei der Durchführung des Secure Device Onboardings aufweist:
Geräte mit dem ToFu-Ansatz (Trust on first use), die einer "beliebigen" Prüfinstanz in der OEM/Endanwender-Umgebung bei der Erbringung eines ersten Beweises der Identität/ Originalität vertrauen und sich anhand ihrer sicheren digitalen Identität unter Verwendung eines Verfahrens wie z.B. OPC UA, Teil 21 oder TLS-Handshake entsprechend authentifizieren.

Zero Trust Geräte, die auf die Kundenumgebungen vorbereitet sind ab Werk. Sie vertrauen der Umgebung bereits, und können im Auslieferungszustand die Identität der Prüfinstanz anhand der entsprechenden Daten (wie z.B. einer Positivliste, auch als Allow-Liste bezeichenbar, oder der entsprechenden Zertifikate), die sie im Werk bekommen haben, prüfen.

Zero Trust Geräte, die nur dem Hersteller im Auslieferungszustand trauen. Diese Geräte vertrauen ihrer Einsatzumgebung im Auslieferungszustand nicht und benötigen die Erlaubnis des Herstellers, da nur dessen Identität im Auslieferungszustand vertraut wird (siehe dazu z.B. ANIMA-BRSKI, BRSKI-AE).

Es ist eine Aufgabe der vorliegenden Erfindung, ein Einbindungsverfahren zum Einbinden einer Clientvorrichtung in eine Einsatzumgebung zu ermöglichen, welches eine Überprüfung einer Version eines Codes der Clientvorrichtung ermöglicht.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Ein erster Aspekt der Erfindung betrifft ein Einbindungsverfahren zum Einbinden einer Clientvorrichtung in eine Einsatzumgebung. Das Einbindungsverfahren kann auch als secure device onboarding bezeichnet werden. Bei der Einsatzumgebung kann es sich beispielsweise um ein Netzwerk oder allgemein um eine Infrastrukturumgebung von vernetzten Vorrichtungen handeln, welche mehrere Clientvorrichtungen umfassen kann. Die Clientvorrichtung soll durch das Einbindungsverfahren in die Einsatzumgebung eingebunden werden, unter einer Bedingung, dass Erfordernisse in Bezug auf eine vorliegende Version eines Codes der Clientvorrichtung hierfür erfüllt sind. Einbinden kann bedeuten, dass auf der Clientvorrichtung Zugangscredentials eingerichet werden, die es der Clientvorrichtung ermöglich, sich gegenüber der Einsatzumgebung, beispielsweise einem Authentisierungsserver der Einsatzumgebung, zu authentisieren. Einbinden kann weiterhin bedeuten, dass in der Einsatzumgebung, beispielsweise auf einem Authenisierungsserver der Einsatzumgebung oder auf einem Berechtigungsserver der Einrichtungsumgebung oder auf einem Gerätemanagementserver der Einsatzumgebung, eine der Clientvorrichtung zugeordnete Berechtigungsinformation eingerichtet wird, die diese Clientvorrichtung als berechtigt zum Zugriff auf diese Einsatzumgebung kennzeichnet.

Das vorgesehene Einbindungsverfahren umfasst ein Versionsüberprüfungsverfahren. Das Versionsüberprüfungsverfahren kann dazu vorgesehen sein, sicherzustellen, dass der Code, welcher in der Clientvorrichtung vorliegt, eine Zulässigkeitsbedingung erfüllt. Mit anderen Worten ergänzt das beschriebene Einbindungsverfahren die Einbindung der Clientvorrichtung um das Versionsüberprüfungsverfahren.

Ein Schritt des Einbindungsverfahrens umfasst eine Übermittlung einer Versionsmitteilungsnachricht durch die Clientvorrichtung an eine Prüfinstanzvorrichtung der Einsatzumgebung. Die Übermittlung der Versionsmitteilungsnachricht umfasst ein Versenden der Versionsmitteilungsnachricht durch die Clientvorrichtung und ein Empfangen der Versionsmitteilungsnachricht durch die Prüfinstanzvorrichtung. Die Versionsmitteilungsnachricht umfasst eine vorliegende Version des auf der Clientvorrichtung installierten Codes. Der Code kann beispielsweise eine Firmware, ein Treiber oder ein Betriebssystem der Clientvorrichtung sein. Der Code kann weiterhin ein Programmcode, ein Automatisierungsprogramm, ein App-Programmcode, ein Virtual-Machine-Image, ein Container-Image oder eine Kombination davon sein, die auf der Clientvorrichtung zur Ausführung durch eine Ausführungseinheit der Clientvorrichtung vorliegen. In einer Variante kann die Versionsmitteilungsnachricht geschützt sein, beispielsweise durch eine digitale Signatur oder durch einen kryptographischen Nachrichtenauthentisierungscode. Weiterhin ist es möglich, dass die Versionsmitteilungsnachricht als Verifiable Credential oder als Verifiable Presentation ausgestaltet ist. Eine kryptographische Prüfsumme der Versionsmitteilungsnachricht kann durch eine Attestierungseinheit der Clientvorrichtung ermittelt werden, z.B. durch ein Trusted Platform Module, ein Secure Element oder einen Crypto-Controller. In diesem Fall kann die Versionsmitteilungsnachricht auch als Code-Attestierung oder als Plattform-Attestierung bezeichnet werden. Diese Variante hat den Vorteil, dass die Versionsmitteilungsnachricht besonders vertrauenswürdig ist.

In einem folgenden Schritt erfolgt durch die Prüfinstanzvorrichtung ein Überprüfen, ob die vorliegende Version des auf der Clientvorrichtung installierten Codes die vorgegebene Zulässigkeitsbedingung in Bezug auf eine vorgegebene Zielversion des Codes erfüllt. Mit anderen Worten vergleicht die Prüfinstanzvorrichtung die auf der Clientvorrichtung vorliegende Version des Codes mit der vorgegebenen Zielversion des Codes. Die Zielversion des Codes kann beispielsweise eine aktuellste Version des Codes betreffen oder eine für einen Betrieb der Clientvorrichtung in der Betriebsumgebung vorgesehene oder dafür freigegebene Version des Codes. In der Überprüfung wird durch die Prüfinstanzvorrichtung überprüft, ob die vorliegende Version des Codes die Zulässigkeitsbedingung in Bezug auf die vorgegebene Zielversion des Codes erfüllt. Die Zulässigkeitsbedingung kann beispielsweise vorgeben, dass der Code nur zulässig ist, wenn die vorliegende Version des Codes auf der Clientvorrichtung mit der vorgegebenen Zielversion des Codes übereinstimmt oder wenn der vorliegende Code auf der Clientvorrichtung in der vorliegenden Version mit der Zielversion kompatibel ist.

Bei der Erfüllung der Zulässigkeitsbedingung durch die vorliegende Version erfolgt durch die Prüfinstanzvorrichtung ein Einbinden der Clientvorrichtung in die Einsatzumgebung. Mit anderen Worten wird durch die Prüfinstanzvorrichtung die Einbindung der Clientvorrichtung in die Einsatzumgebung eingeleitet, wenn die Zulässigkeitsbedingung erfüllt ist.

Bei Nichterfüllung der Zulässigkeitsbedingung durch die vorliegende Version der Clientvorrichtung erfolgt ein Verweigern der Einbindung der Clientvorrichtung in die Einsatzumgebung durch die Prüfinstanzvorrichtung. Mit anderen Worten ist es vorgesehen, dass das Einbindungsverfahren zum Einbinden der Clientvorrichtung in die Einsatzumgebung durch die Prüfinstanzvorrichtung abgebrochen wird, wenn die Zulässigkeitsbedingung nicht erfüllt ist.

Weiterhin ist es möglich, dass das Einbinden in die Einsatzumgebung automatisch erfolgt, wenn die Zulässigkeitsbedingung erfüllt ist, und dass bei Nichterfüllung der Zulässigkeitsbedingung eine Freigabeprozess angestoßen wird, bei dem berechtigter Nutzer das Einbinden freigeben kann, und dass das Einbinden erst noch erfolgter Freigabe erfolgt.

Durch die Erfindung ergibt sich der Vorteil, dass das Einbindungsverfahren zum Einbinden der Clientvorrichtung um eine Versionsüberprüfung des Codes ergänzt ist. Durch das Einbindungsverfahren kann somit nicht nur eine Authentizität der Clientvorrichtung vor der Einbindung der Clientvorrichtung überprüft werden, sondern auch Kompatibilitäts- und/oder Sicherheitsprobleme, die durch eine Einbindung von Clientvorrichtungen mit einem Code in einer veralteten und/oder nicht kompatiblen Version auftreten können, vermieden werden. Auch kann vermieden werden, dass ein Betriebsprozess, insbesondere ein Produktionsprozess, nicht mit der erforderlichen Zuverlässigkeit durchgeführt wird. Dies kann auftreten, wenn Clientvorrichtungen mit anderen Versionen ihres Codes verwendet würden als getestet und freigegeben. Insbesondere kann dadurch vermieden werden, dass eine Clientvorrichtung, z.B. ein industrielles Steuergerät, in ein operativ genutztes Automatisierungssystem (Einsatzumgebung) eingebunden wird, wenn sie einen Software-Stand (Code) aufweist, der nicht für operative Nutzung in diesem Automatisierungssystem freigegeben ist.

Eine Weiterbildung der Erfindung sieht vor, dass das Versionsüberprüfungsverfahren ein Abrufen der vorgegebenen Zielversion des Codes und/oder ein Abrufen der vorgegebenen Zulässigkeitsbedingung von einer Versionsverwaltungseinrichtung durch die Prüfinstanzvorrichtung umfasst. Mit anderen Worten erfolgt durch die Prüfinstanzvorrichtung ein Abrufen der Zielversion des Codes der Clientvorrichtung. Die Zielversion kann beispielsweise eine aktuelle Version des Codes beschreiben. Zusätzlich oder alternativ dazu kann die vorgegebene Zulässigkeitsbedingung durch die Prüfinstanzvorrichtung von der Versionsverwaltungseinrichtung abgerufen werden. Die Zulässigkeitsbedingung kann beispielsweise eine zulässige Versionsdifferenz zwischen der Zielversion und der vorliegenden Version vorgeben. Bei der Versionsverwaltungseinrichtung kann es sich beispielsweise um eine Servervorrichtung zur Versionsverwaltung handeln, welche durch einen Hersteller der Clientvorrichtung bereitgestellt sein kann die Versionsverwaltungseinrichtung kann innerhalb oder außerhalb der Betriebsumgebung sein. Durch die Weiterbildung ergibt sich der Vorteil, dass die Prüfinstanzvorrichtung das Versionsüberprüfungsverfahren unter Einbindung von Herstellern der Clientvorrichtungen durchführen kann.

Eine Weiterbildung der Erfindung sieht vor, dass durch die Prüfinstanzvorrichtung eine Versionsanfragenachricht an die Clientvorrichtung übermittelt wird. Die Versionsanfragenachricht umfasst eine Aufforderung zum Übermitteln der Versionsmitteilungsnachricht durch die Clientvorrichtung an die Prüfinstanzvorrichtung.

Eine Weiterbildung der Erfindung sieht vor, dass das Einbindungsverfahren nach dem BRSKI-AE-Standard durchgeführt wird. Mit anderen Worten ist das Versionsüberprüfungsverfahren als Erweiterung des BRSKI-AE: Alternative Enrollment Protocols in BRSKI für die Bootstrapping Remote Secure Key Infrastructure (BRSKI) RFC 8995 vorgesehen. In dieser Weiterbildung ist es vorgesehen, einen Registrar der Einsatzumgebung gemäß BRSKI derart zu erweitern, dass dieser als die beschriebene Prüfinstanzvorrichtung des Versionsüberprüfungsverfahrens verwendet wird. Eine Manufacturer Authorized Signing Authority (MASA) gemäß BRSKI kann zum Betrieb als Versionsverwaltungseinrichtung eingerichtet sein.

Eine Weiterbildung der Erfindung sieht vor, dass die Versionsmitteilungsnachricht als Signed Voucher Request Nachricht nach dem BRSKI-AE-Standard eingerichtet ist. Mit anderen Worten wird das Versionsüberprüfungsverfahren in das Einbindungsverfahren nach dem BRSKI-AE-Standard eingebunden. Dabei ist es vorgesehen, dass eine sogenannte Pledge Voucherrequest Nachricht gemäß Punkt 5.2. (BRSKI) RFC 8995, welche nach dem BRSKI-AE-Standard durch die Clientvorrichtung an die Prüfinstanz übermittelt wird, dahingehend erweitert wird, dass diese die vorliegende Version des Codes auf der Clientvorrichtung umfasst. Durch die Weiterbildung ergibt sich der Vorteil, dass das bestehende Einbindungsverfahren nach dem BRSKI-AE-Standard erweitert wird.

Eine Weiterbildung der Erfindung sieht vor, dass die Versionsmitteilungsnachricht als Voucher Nachricht nach dem BRSKI-AE-Standard eingerichtet ist, welche im Anschluss an eine erfolgreich abgeschlossenen Identitäts-/Originalitätsprüfung der Clientvorrichtung nach dem BRSKI-AE-Standard durch die Clientvorrichtung an die Prüfinstanzvorrichtung übermittelt wird. Mit anderen Worten wird das Einbindungsverfahren gemäß dem BRSKI-AE-Standard durchgeführt. Das BRSKI-AE Verfahren umfasst eine Identitäts-/Originalitätsprüfung der Clientvorrichtung durch die Prüfinstanzvorrichtung. Es ist vorgesehen, dass das bestehende Einbindungsverfahren dahingehend ergänzt wird, dass das beschriebene Versionsüberprüfungsverfahren nach einem erfolgreichen Abschluss der Identitäts-/Originalitätsprüfung eingeleitet wird. Dabei ist es vorgesehen, dass nach Abschluss der Identitäts-/Originalitätsprüfung und somit nachdem die Clientvorrichtung den angeforderten Voucher von der Prüfinstanzvorrichtung erhalten hat, die Clientvorrichtung die Versionsmitteilungsnachricht an die Prüfinstanzvorrichtung übermittelt. Der Vouchers kann das Element sein, welches der Pledge von dem MASA über des Registrar zugesandt bekommt, wie es unter den Punkten 5.5 (BRSKI) RFC 8995 beschrieben ist. Die Versionsmitteilungsnachricht ist dabei als Voucher Nachricht gemäß dem BRSKI-AE-Standard eingerichtet. Durch die Weiterbildung ergibt sich der Vorteil, dass das Einbindungsverfahren gemäß dem BRSKI-AE-Standard um das Versionsüberprüfungsverfahren erweitert wird, welches nach der bestandenen Identitäts-/Originalitätsprüfung eingeleitet wird. Dadurch ergibt sich der Vorteil, dass das beschriebene Versionsüberprüfungsverfahren nur durchgeführt wird, wenn die Clientvorrichtung die Identitäts-/Originalitätsprüfung bestanden hat. Somit kann eine unnötige Durchführung des Versionsüberprüfungsverfahrens vermieden werden.

Eine Weiterbildung der Erfindung sieht vor, dass das Verfahren ein Speichern des Ergebnisses der Überprüfung der Erfüllung der Zulässigkeitsbedingung in einem Protokoll der Einsatzumgebung durch die Prüfinstanzvorrichtung beschreibt. Das Ergebnis kann beispielsweise die vorliegende Version des Codes der Clientvorrichtung angeben. Das Ergebnis kann beispielsweise in einem Inventar und in einem Log der Einsatzumgebung gespeichert werden. Ein weiterer Schritt umfasst ein Einleiten einer vorgegebenen Aktion in Abhängigkeit von dem gespeicherten Ergebnis der Überprüfung der Erfüllung der Zulässigkeitsbedingung.

Eine Weiterbildung der Erfindung sieht vor, dass das Verfahren ein Auslesen des Ergebnisses der Überprüfung der Erfüllung der Zulässigkeitsbedingung aus dem Protokoll durch eine Versionsprüfeinrichtung der Einsatzumgebung umfasst. Mit anderen Worten ist in der Einsatzumgebung die Versionsprüfeinrichtung bereitgestellt. Die Versionsprüfeinrichtung ist dazu eingerichtet, das Ergebnis der Überprüfung der Erfüllung der Zulässigkeitsbedingung nach der erfolgten Einbindung der Clientvorrichtung in die Einsatzumgebung zu überprüfen. Die Versionsprüfeinrichtung kann mit der Prüfinstanzvorrichtung identisch sein oder sie kann als zusätzliche Clientvorrichtung bereitgestellt sein.

Ein weiterer Schritt umfasst ein Überprüfen durch die Versionsprüfeinrichtung, ob eine vorgegebene Aktualisierungsbedingung zum Aktualisieren des Codes auf der Clientvorrichtung erfüllt ist. Mit anderen Worten wird durch die Versionsprüfeinrichtung ermittelt, ob der in der vorliegenden Version vorliegende Code in der Clientvorrichtung aktualisiert werden kann. Die Prüfung der Aktualisierungsbedingung kann beispielsweise eine Prüfung umfassen, ob eine neuere Version des Codes verfügbar ist. Die Prüfung der Aktualisierungsbedingung kann auch eine Prüfung umfassen, ob die Clientvorrichtung aufgrund seiner Hardware oder Konfiguration für die Durchführung der Aktualisierung geeignet ist.

Ein weiterer Schritt umfasst ein Einleiten der Aktualisierung des Codes der Clientvorrichtung durch die Versionsprüfeinrichtung, wenn die Aktualisierungsbedingung erfüllt ist. Zudem erfolgt ein Aktualisieren der in dem Protokoll der Einsatzumgebung hinterlegten Version des Codes durch die Versionsprüfeinrichtung. Mit anderen Worten, wenn die Aktualisierungsbedingung erfüllt ist, wird der Code in der Clientvorrichtung durch die Versionsprüfeinrichtung aktualisiert. Die Aktualisierung des Codes kann durch die Versionsprüfeinrichtung erfolgen, indem der aktuelle Code an die Client-Einrichtung übertragen wird oder indem der Aktualisierungsvorgang in der Client-Einrichtung selbst eingeleitet wird. Das Verfahren umfasst ein Aktualisieren der Version in dem Protokoll der Einsatzumgebung durch die Versionsprüfeinrichtung. Mit anderen Worten wird in dem Protokoll der Einsatzumgebung nach einem erfolgreichen Abschluss der Aktualisierung die neu eingespielte Version des Codes hinterlegt. Durch die Weiterbildung ergibt sich der Vorteil, dass auch nach Einbindung der Clientvorrichtung sichergestellt werden kann, dass eine zulässige Version des Codes in der Clientvorrichtung vorliegt. Somit kann sichergestellt sein, dass bei einer Bereitstellung einer neuen Zielversion die Bereitstellung der Zielversion in der Clientvorrichtung erfolgt.

Ein weiterer Schritt umfasst das Übertragen einer Codeausführungsberechtigungsinformation an die Clientvorrichtung durch die Versionsprüfeinrichtung abhängig davon, ob die Aktualisierungsbedingung erfüllt ist. Abhängig davon kann der Code oder ein Teilbereich des Codes auf der Clientvorrichtung zur Ausführung durch eine Ausführungseinheit der Clientvorrichtung freigegeben werden. Dadurch kann erreicht werden, dass auf der Clientvorrichtung nur eine Teilmenge oder ein Teilbereich des auf der Clientvorrichtung vorliegenden Codes ausführbar ist. Dadurch kann beispielsweise die Clientvorrichtung in die Einsatzumgebung mit eingeschränkter Funktionalität eingebunden werden.

Ein zweiter Aspekt der Erfindung betrifft eine Prüfinstanzvorrichtung für eine Einsatzumgebung. Die Prüfinstanzvorrichtung ist zur Durchführung der durch die Prüfinstanzvorrichtung in dem Verfahren gemäß dem ersten Aspekt der Erfindung durchzuführenden Schritte eingerichtet. Die Prüfinstanzvorrichtung ist dazu eingerichtet, eine Versionsmitteilungsnachricht durch eine Clientvorrichtung, welche in die Einsatzumgebung eingebunden werden soll, zu empfangen. Die Versionsmitteilungsnachricht umfasst eine vorliegende Version eines auf der Clientvorrichtung installierten Codes. Die Prüfinstanzvorrichtung ist dazu eingerichtet, zu überprüfen, ob die vorliegende Version des auf der Clientvorrichtung installierten Codes eine vorgegebene Zulässigkeitsbedingung in Bezug auf eine vorgegebene Zielversion des Codes erfüllt. Die Prüfinstanzvorrichtung ist dazu eingerichtet, bei Erfüllung der Zulässigkeitsbedingung durch die vorliegende Version ein Verfahren zum Einbinden der Clientvorrichtung in die Einsatzumgebung einzuleiten. Die Prüfinstanzvorrichtung ist dazu eingerichtet bei Nichterfüllung der Zulässigkeitsbedingung durch die vorliegende Version eine Einbindung der Clientvorrichtung in die Einsatzumgebung zu verweigern.

Ein dritter Aspekt der Erfindung betrifft eine Versionsprüfeinrichtung für eine Einsatzumgebung. Die Versionsprüfeinrichtung ist dazu eingerichtet, aus einem Protokoll der Einsatzumgebung ein Ergebnis einer Überprüfung der Erfüllung einer Zulässigkeitsbedingung auszulesen. Das Ergebnis kann eine vorliegende Version eines Codes der Clientvorrichtung umfassen. Die Prüfeinrichtung ist dazu eingerichtet zu überprüfen, ob eine vorgegebene Aktualisierungsbedingung zum Aktualisieren des Codes auf der Clientvorrichtung erfüllt ist. Die Versionsprüfeinrichtung ist dazu eingerichtet, bei einer Erfüllung der Aktualisierungsbedingung eine Aktualisierung des Codes in der Clientvorrichtung einzuleiten, um die Version des Codes der Clientvorrichtung zu aktualisieren. Die Prüfeinrichtung ist dazu eingerichtet, die aktualisierte Version in dem Protokoll der Einsatzumgebung zu hinterlegen.

Ein vierter Aspekt der Erfindung betrifft eine Einsatzumgebung, welche zumindest eine Prüfinstanzvorrichtung gemäß dem zweiten Aspekt der Erfindung umfasst. Die Einsatzumgebung kann beispielsweise als physikalisches Netzwerk oder als virtuelles Netzwerk oder als OT Infrastrukturumgebung eingerichtet sein.

Ein fünfter Aspekt der Erfindung betrifft eine Clientvorrichtung. Die Clientvorrichtung ist dazu eingerichtet, eine Versionsmitteilungsnachricht an eine Prüfinstanzvorrichtung einer Einsatzumgebung zu übermitteln, wobei die Versionsmitteilungsnachricht eine vorliegende Version eines auf der Clientvorrichtung installierten Codes umfasst.

Bei dem vorgestellten Verfahren handelt es sich insbesondere im Wesentlichen um ein computerimplementiertes Verfahren. Daher betrifft ein sechster Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem ersten Aspekt durchzuführen.

Ebenfalls betrifft die Erfindung als siebten Aspekt ein computerlesbares Speichermedium mit dem Computerprogrammprodukt nach dem fünften Aspekt.

Unter einer Recheneinheit / elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), einen oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:

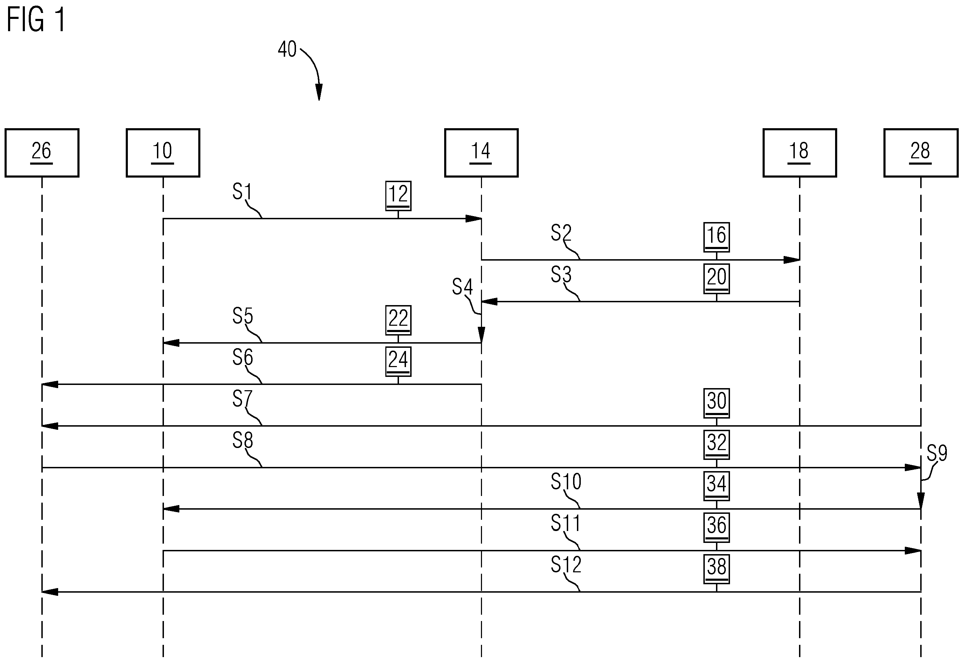

FIG 1 zeigt eine schematische Darstellung eines Ablaufs eines Versionsüberprüfungsverfahrens eines Einbindungsverfahrens zum Einbinden einer Clientvorrichtung in eine Einsatzumgebung; und
FIG 2 zeigt eine schematische Darstellung einer Einsatzumgebung.

In einem ersten Schritt S1 kann von einer in die Einsatzumgebung 40 einzubindenden Clientvorrichtung 10 eine Versionsmitteilungsnachricht 12 an eine Prüfinstanzvorrichtung 14 der Einsatzumgebung 40 übermittelt werden, wobei die Versionsmitteilungsnachricht 12 eine vorliegende Version eines auf der Clientvorrichtung 10 installierten Codes umfassen kann. Die Prüfinstanzvorrichtung 14 kann dazu eingerichtet sein, zu prüfen, ob die vorliegende Version des auf der Clientvorrichtung 10 installierten Codes eine vorgegebene Zulässigkeitsbedingung in Bezug auf eine vorgegebene Zielversion des Codes erfüllt. Die vorgegebene Zulässigkeitsbedingung und/oder die Zielversion des Codes können in der Prüfinstanzvorrichtung 14 gespeichert sein.

Es kann auch vorgesehen sein, dass eine Versionsverwaltungseinrichtung 18 zur Überprüfung der vorliegenden Version des Codes eingebunden ist. Beispielsweise kann vorgesehen sein, dass in einem Schritt S2 eine Zielversionsanfragenachricht 16 von der Prüfinstanzvorrichtung 14 an die Versionsverwaltungsvorrichtung 18 übermittelt wird, in der die Zielversion und/oder die Zulässigkeitsbedingung von der Versionsverwaltungsvorrichtung 18 angefordert wird. Es kann auch vorgesehen sein, dass in der Zielversionsanfragenachricht 16 die Versionsmitteilungsnachricht 12 übermittelt wird.

In einem Schritt S3 kann von der Versionsverwaltungseinrichtung 18 eine Zielversionsantwortnachricht 20 an die Prüfinstanzvorrichtung 14 übermittelt werden, die die Zielversion und die Zulässigkeitsbedingung umfassen kann.

Die Prüfinstanzvorrichtung 14 kann in einem Schritt S4 überprüfen, ob die vorliegende Codeversion die Zulässigkeitsbedingung bezüglich der vorgegebenen Zielversion des Codes erfüllt. Wenn die Zulässigkeitsbedingung erfüllt ist, kann ein Integrationsvorgang zum Integrieren der Clientvorrichtung 10 in die Einsatzumgebung 40 durch die Prüfinstanzvorrichtung 14 initiiert werden.

Dabei kann beispielsweise eine Einbindungsnachricht 22 in einem Schritt S5 an die Clientvorrichtung 10 übermittelt werden.

In einem Schritt S6 kann durch die Prüfinstanzvorrichtung 14 eine Protokolleintragsnachricht 24 an eine Protokolleinrichtung 26 der Einsatzumgebung 40 übermittelt werden, die die erfolgreiche Integration der Clientvorrichtung 10 beschreibt und die in der Clientvorrichtung 10 vorliegende Version umfasst.

In einem Schritt S7 kann durch eine Versionsprüfeinrichtung 28 eine Protokollanfragenachricht 30 an die Protokolleinrichtung 26 übermittelt werden, um die in der Clientvorrichtung 10 vorliegende Version abzurufen.

In einem Schritt S8 kann durch die Protokolleinrichtung 26 eine Protokollantwortnachricht 32 an die Versionsprüfeinrichtung 28 übermittelt werden, die die vorliegende Version beschreibt.

Die Versionsprüfeinrichtung 28 kann in einem Schritt S9 überprüfen, ob die Version aktuell ist.

In einem Schritt S10 kann für den Fall, dass die Version nicht aktuell ist, von der Versionsprüfeinrichtung 28 eine Aktualisierungsnachricht 34 an die Clientvorrichtung 10 gesendet werden, um eine Aktualisierung des Codes zu initiieren.

Nach Abschluss der Aktualisierung kann durch die Clientvorrichtung 10 in einem Schritt S11 eine Aktualisierungsabschlussnachricht 36 an die Versionsprüfeinrichtung 28 übermittelt werden.

Nach Empfang der Aktualisierungsabschlussnachricht 36 kann in einem Schritt S12 durch die Versionsprüfeinrichtung 28 eine Protokollaktualisierungsnachricht 38 an die Protokolleinrichtung 26 übermittelt werden, um den Eintrag über die in der Clientvorrichtung 10 vorliegende Version des Codes zu aktualisieren.

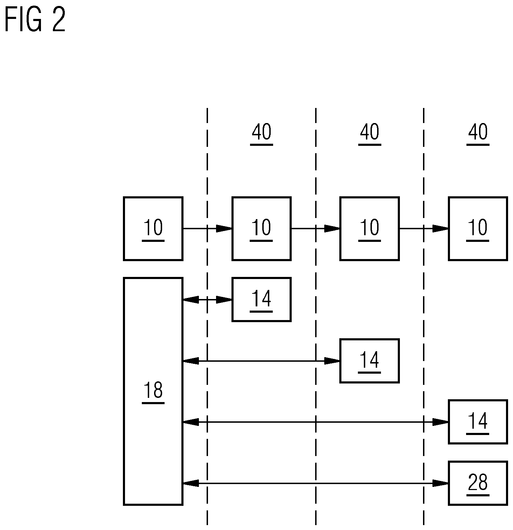

FIG 2 zeigt eine schematische Darstellung einer Einsatzumgebung.

Die oben beschriebenen erfindungsgemäßen technischen Merkmale sind in FIG 2 veranschaulicht. FIG 2 zeigt eine Sicherstellung der Überwachung und wenn nötig der Aktualisierung der Version des Codes in der Clientvorrichtung 10. Die Clientvorrichtung 10 kann von einem Hersteller produziert und über eine Kette von Zwischenlieferanten zu einem Endabnehmer gebracht werden. Die Zwischenlieferanten können die Clientvorrichtung 10 in Ihre jeweilige Einsatzumgebung 40 einbinden und die Clientvorrichtung 10 anpassen. Die Einbindung kann durch die Prüfinstanzvorrichtung 14 der jeweiligen Einsatzumgebung 40 erfolgen. Um sicherzustellen, dass eine zulässige Version des Codes in der Clientvorrichtung 10 vorliegt, kann der Hersteller die Versionsverwaltungsvorrichtung 18 bereitstellen, aus welcher die Prüfinstanzvorrichtungen 14 die Zielversion und die Zulässigkeitsbedingung abrufen können. Der Endabnehmer kann auch die Versionsprüfeinrichtung 28 betreiben, um die Version des Codes der Clientvorrichtung 10 nach der Einbindung überprüfen zu können.

Eine wesentliche Idee der vorliegenden Erfindung besteht darin, den Ablauf, eines Einbindungsverfahrens, das sogenannte Secure Device Onboarding durch eine Überprüfung einer Version eines Codes, beispielsweise einen Status einer Firmware und/oder eines Betriebssystems zu erweitern und die Komponenten der für das Secure Device Onboarding verwendeten Infrastruktur wie z.B. den sog. Registrar und den sog. MASA nach BRSKI und/oder den Registrar nach OPC UA Part 21 dazu zu befähigen, diesen Ablauf adäquat zu unterstützen. Außerdem beinhaltet die Erfindung eine Beschreibung des Mechanismus zur Aufrechterhaltung eines stets aktuellen / geeigneten Standes der Firmware und des Betriebssystems.

Für Geräte mit dem ToFu-Ansatz (Trust on first use), und Zero Trust Geräte, die auf die Kundenumgebungen ab Werk vorbereitet sind, kann der Ablauf der Prüfung im Rahmen des Secure Device Onboarding dahingehend erweitert werden, dass die jeweilige Prüfinstanzvorrichtung 14, die in einer OEM- oder einer Endanwenderumgebung entsprechend installiert ist oder beispielweise auf eine geeignete Art und Weise in einer Cloud-Umgebung zur Verfügung steht, den Stand des Betriebssystems und der Firmware vom Gerät erfragen kann. Dazu wird einerseits das jeweilige Verfahren durch eine entsprechende zusätzliche Interaktion oder auf eine geeignete Art und Weise in die existierenden Interaktionen eingebettete Anfrage und die darauffolgende Antwort des Gerätes erweitert. Andererseits wird die Prüfinstanzvorrichtung 14 dazu befähigt, die Informationen bezüglich des letzten vom Hersteller bereitgestellten und empfohlenen Betriebssystemstandes und des Firmwarestandes von einer Versionsverwaltungseinrichtung 18 vom Hersteller oder von einem anderen dafür vorgesehenen Ort zu beziehen.

Für Zero Trust Geräte, die nur dem Hersteller im Auslieferungszustand trauen, kann beispielsweise der Hersteller den Stand des Betriebssystems und der Firmware des Gerätes im Rahmen des Secure Device Onboarding überprüfen. Um dies zu ermöglichen, wird ein Ablauf zum Secure Device Onboarding gemäß dem Stand der Technik durch die Übermittlung des Standes des Betriebssystems und der Firmware von dem Gerät an die jeweilige Prüfinstanzvorrichtung 14 erweitert. Falls beispielsweise das BRSKI-AE-Verfahren zum Einsatz kommt, werden diese Informationen entweder in den bereits zum Einsatz kommenden Voucher, der vom sog. Pledge an den sog. Registrar übermittelt wird, "einkodiert" oder es wird ein separater Voucher eingeführt, der dazu dient, diese Informationen an den Registrar im Anschluss an eine erfolgreich abgeschlossenen Identitäts-/Originalitätsprüfung zu übermitteln. Alternativ kann die Überprüfung des Standes des Betriebssystems und der Firmware auch so realisiert werden, dass die Prüfinstanzvorrichtung 14, die beispielsweise bei BRSKI als Registrar bezeichnet wird oder ein Online-Dienst des Herstellers,der beispielsweise bei BRSKI als MASA bezeichnet wird, das Gerät, das gerade geprüft wird, fragt, ob das Betriebssystem und die Firmware auf einem bestimmten Stand sind. Dabei kann diese Frage beispielweise in einen signierten Voucher geeignet reinkodiert werden. Die entsprechende Antwort kann dann ggf. nur "ok" bzw. "ja" oder "nicht ok" bzw. "nein" lauten und ebenfalls beispielsweise in einen signierten Voucher reinkodiert werden.

Ein weiteres erfindungsgemäßes technisches Merkmal gemäß der vorliegenden Erfindung besteht darin, dass das Ergebnis der oben skizzierten durch die vorliegende Erfindungsmeldung erweiterten Prüfung im Inventar und im Log der Einsatzumgebung 40 entsprechend hinterlegt wird und dazu genutzt wird, eine Aktion automatisiert, beispielsweise basierend auf vordefinierten oder dynamisch konfigurierbaren Policys/Profilen oder in Rücksprache mit dem zuständigen Benutzer oder durch den Benutzer manuell auszulösen.

Falls der ermittelte Stand des Betriebssystems und/oder der ermittelte Stand der Firmware nicht aktuell/optimal ist, wird durch die vorliegende Erfindung als eine mögliche Aktion die Überprüfung angestoßen, unter anderem unter Berücksichtigung der Hardware und der Fähigkeiten des jeweiligen Gerätes, ob ein Update technisch möglich ist. Diese Überprüfung kann von der oben genannten Prüfinstanz die beispielsweise im OPC UA- oder BRSKI-Kontext als Registrar bezeichnet wird vorgenommen werden, wobei diese gegebenenfalls Rücksprache mit einem entsprechenden Online-Service des Herstellers der beispielsweise im BRSKI-Kontext als MASA bezeichnet wird hält. Diese Überprüfung repräsentiert ein weiteres erfindungsgemäßes technisches Merkmal gemäß der vorliegenden Erfindung.

Falls die oben genannte Überprüfung ergeben hat, dass ein Update des Betriebssystems und/oder der Firmware möglich ist, wird automatisiert oder in Rücksprache mit dem Benutzer ein Update angestoßen.

Das Ergebnis des Updates, z.B. "erfolgreich", "fehlgeschlagen" wird ebenfalls im Inventar und im Log der Einsatzumgebung 40 entsprechend hinterlegt.

Zur Laufzeit werden die in der jeweiligen Einsatzumgebung 40 verbauten, erfassten und im Inventar der Umgebung aufgelisteten Geräte die beispielsweise mittels des Secure Device Onboarding automatisiert und/oder durch einen Benutzer manuell inventarisiert wurden von der jeweiligen Prüfinstanz darauf geprüft, ob ihr Betriebssystem und ihre Firmware immer noch auf dem aktuellen Stand ist bzw. den entsprechenden Anforderungen/ Vorgaben/ Randbedingungen entspricht. Als Prüfinstanz kann dabei die Instanz dienen, die bereits im Rahmen des Secure Device Onboarding zum Einsatz kam. Alternativ kann die Prüfung von einer anderen Instanz die beispielsweise in Form eines entsprechenden Dienstes bereitgestellt werden kann, z.B. einem Common Device Management System in festgelegten Zeitabständen zyklisch, oder getriggert durch bestimmte Ereignisse/ Security Events vorgenommen werden. Neben dieser Funktionalität wird durch die vorliegende Erfindung sichergestellt, dass die für diese Prüfung benötigten Informationen, die als Entscheidungskriterien dienen bzw. in die Entscheidung einfließen, regelmäßig vom Hersteller bzw. von einem relevanten, vom Hersteller betriebenen Portal wie z.B. dem Sie Portal von Siemens und/oder von einem anderen adäquaten Ort bezogen werden.

In einer weiteren möglichen Ausführung der vorliegenden Erfindungsmeldung ein entsprechend erweiterter Secure Device Onboarding Assistent unter Berücksichtigung der Vorgaben des ebenfalls entsprechend erweiterten Secure Device Onboarding Managers die Überprüfung des Standes des Betriebssystems und des Standes der Firmware in einer Kundenumgebung flexibel und konfigurierbar sowie das Anstoßen weiterer Aktionen vornehmen.

Wie erläutert, sind die Hersteller und auch die OEM/Endanwender zunehmend für das Thema "Secure Device Onboarding" sensibilisiert und arbeiten - zusammen mit den Herstellern - an der Standardisierung / Erprobung der entsprechenden Verfahren wie z.B. BRSK-AE, ANIMA-BRSKI und OPC UA. Weitere Prüfungen, insb. die Prüfung, ob der aktuelle Stand des Betriebssystems und der Firmware den Fähigkeiten des Gerätes, den Randbedingungen innerhalb der Einsatzumgebung 40 und dem anvisierten Einsatzzweck entspricht - sowohl im Rahmen des Secure Device Onboarding als auch zur Laufzeit - finden heute nicht statt. Auch eine angemessene Reaktion auf die möglicherweise ermittelten Abweichungen stellt dabei keine heute bekannte Zielsetzung dar. Der Stand der Überprüfung und die möglichen Handlungsanweisungen an den Benutzer werden aktuell weder im Geräteinventar noch im Log der Einsatzumgebung 40 abgebildet.

Durch die vorliegende Erfindung werden die beschriebenen Probleme gelöst. Es wird sichergestellt, dass die Notwendigkeit eines Updates sowohl im Rahmen des Secure Device Onboarding als auch zur Laufzeit rechtzeitig erkannt wird und dass ein Update (wenn technisch realisierbar) möglichst zeitnah erfolgt.

Der Hauptvorteil, der sich dadurch ergibt, besteht in der Erhöhung der Verfügbarkeit, denn es wird Ausfällen aufgrund der veralteten Versionen der Betriebssysteme und der Firmware vorgebeugt. Außerdem wird die Transparenz hinsichtlich der in einer Einsatzumgebung 40 installierten Geräte einschl. deren Betriebssysteme und der Firmware erhöht. Zudem wird die Sicherheit der Gesamtlösung verbessert, da Geräte mit einer aktuellen Software- und Firmwareversion, in der z.B. Sicherheitslücken geschlossen wurden, in Betrieb genommen werden.

## Patentansprüche

1. Einbindungsverfahren zum Einbinden einer Clientvorrichtung (10) in eine Einsatzumgebung (40), wobei das Einbindungsverfahren ein Versionsüberprüfungsverfahren umfasst, das die folgenden Schritte umfasst:
- Übermittlung einer Versionsmitteilungsnachricht (12) durch die Clientvorrichtung (10) an eine Prüfinstanzvorrichtung (14) der Einsatzumgebung (40), wobei die Versionsmitteilungsnachricht (12) eine vorliegende Version eines auf der Clientvorrichtung (10) installierten Codes beschreibt;
- Überprüfen durch die Prüfinstanzvorrichtung (14), ob die vorliegende Version des auf der Clientvorrichtung (10) installierten Codes eine vorgegebene Zulässigkeitsbedingung in Bezug auf eine vorgegebene Zielversion des Codes erfüllt;
- Bei Erfüllung der Zulässigkeitsbedingung durch die vorliegende Version, Einleiten eines Verfahrens zum Einbinden der Clientvorrichtung (10) in die Einsatzumgebung (40) durch die Prüfinstanzvorrichtung (14); und
- bei Nichterfüllung der Zulässigkeitsbedingung durch die vorliegende Version, verweigern der Einbindung der Clientvorrichtung (10) in die Einsatzumgebung (40) durch die Prüfinstanzvorrichtung (14).

2. Verfahren nach Anspruch 1, wobei das Versionsüberprüfungsverfahren den folgenden Schritt umfasst:
- Abrufen der vorgegebenen Zielversion des Codes und/oder der vorgegebenen Zulässigkeitsbedingung von einer Versionsverwaltungseinrichtung (18) durch die Prüfinstanzvorrichtung (14).

3. Verfahren nach Anspruch 1 oder 2, wobei durch die Prüfinstanzvorrichtung (14) eine Versionsanfragenachricht an die Clientvorrichtung (10) übermittelt wird, und die Versionsmitteilungsnachricht (12) als Reaktion an die Prüfinstanz oder die Versionsverwaltungseinrichtung (18) übermittelt wird

4. Verfahren nach einem der vorhergehenden Ansprüche, wobei das Verfahren nach dem BRSKI-AE-Standard durchgeführt wird.

5. Verfahren nach Anspruch 4, wobei die Versionsmitteilungsnachricht (12) als Signed Voucher Request Nachricht nach dem BRSKI-AE-Standard eingerichtet ist.

6. Verfahren nach Anspruch 4, wobei die Versionsmitteilungsnachricht (12) als Voucher Nachricht nach dem BRSKI-AE-Standard eingerichtet ist, welche im Anschluss an eine erfolgreich abgeschlossenen Identitäts-/Originalitätsprüfung der Clientvorrichtung (10) nach dem BRSKI-AE-Standard durch die Prüfinstanzvorrichtung (14) übermittelt wird.

7. Verfahren nach einem der vorhergehenden Ansprüche, wobei das Versionsüberprüfungsverfahren die folgenden Schritte umfasst:
- Speichern des Ergebnisses der Überprüfung der Erfüllung der Zulässigkeitsbedingung in einem Protokoll der Einsatzumgebung (40) durch die Prüfinstanzvorrichtung (14); und
- Einleiten einer vorgegebenen Aktion in Abhängigkeit von dem gespeicherten Ergebnis der Überprüfung der Erfüllung der Zulässigkeitsbedingung.

8. Verfahren nach einem der vorhergehenden Ansprüche, wobei das Versionsüberprüfungsverfahren die folgenden Schritte umfasst:
- Auslesen des Ergebnisses der Überprüfung der Erfüllung der Zulässigkeitsbedingung aus dem Protokoll durch eine Versionsprüfeinrichtung (28) der Einsatzumgebung (40);
- Überprüfen durch die Versionsprüfeinrichtung (28), ob eine vorgegebene Aktualisierungsbedingung zum Aktualisieren des Codes auf der Clientvorrichtung (10) erfüllt ist;
- Einleiten der Aktualisierung des Codes in der Clientvorrichtung (10) durch die Versionsprüfeinrichtung (28); und Aktualisieren der Version in dem Protokoll der Einsatzumgebung (40) durch die Versionsprüfeinrichtung (28).

9. Prüfinstanzvorrichtung (14) einer Einsatzumgebung (40), **dadurch gekennzeichnet, dass** die Prüfinstanzvorrichtung (14) dazu eingerichtet ist,
- eine Versionsmitteilungsnachricht (12) von einer Clientvorrichtung (10) zu empfangen, wobei die Versionsmitteilungsnachricht (12) eine vorliegende Version eines auf der Clientvorrichtung (10) installierten Codes umfasst;
- zu überprüfen, ob die vorliegende Version des auf der Clientvorrichtung (10) installierten Codes eine vorgegebene Zulässigkeitsbedingung in Bezug auf eine vorgegebene Zielversion des Codes erfüllt;
- bei Erfüllung der Zulässigkeitsbedingung durch die vorliegende Version, ein Verfahren zum Einbinden der Clientvorrichtung (10) in die Einsatzumgebung (40) einzuleiten; und
- bei Nichterfüllung der Zulässigkeitsbedingung durch die vorliegende Version, eine Einbindung der Clientvorrichtung (10) in die Einsatzumgebung (40) zu verweigern.

10. Versionsprüfeinrichtung (28) einer Einsatzumgebung (40), **dadurch gekennzeichnet, dass** die Versionsprüfeinrichtung (28) dazu eingerichtet ist
- ein Ergebnis einer Überprüfung einer Erfüllung einer Zulässigkeitsbedingung aus einer Protokolleinrichtung (26) der Einsatzumgebung (40) auszulesen;
- Zu überprüfen, ob eine vorgegebene Aktualisierungsbedingung zum Aktualisieren des Codes auf der Clientvorrichtung (10) erfüllt ist; und
- eine Aktualisierung des Codes in der Clientvorrichtung (10) einzuleiten und eine Version in dem Protokoll der Protokolleinrichtung (26) zu aktualisieren.

11. Clientvorrichtung (10), **dadurch gekennzeichnet, dass** die Clientvorrichtung (10), dazu eingerichtet ist, eine Versionsmitteilungsnachricht (12) an eine Prüfinstanzvorrichtung (14) einer Einsatzumgebung (40) zu versenden, wobei die Versionsmitteilungsnachricht (12) eine vorliegende Version eines auf der Clientvorrichtung (10) installierten Codes umfasst.

12. Computerprogramm, welches direkt in einen Speicher einer elektronischen Recheneinrichtung ladbar ist, mit Programm-Mitteln, um die Schritte des Verfahrens nach einem der Ansprüche 1 bis 8 auszuführen, wenn das Programm in der elektronischen Recheneinrichtung ausgeführt wird.

13. Elektronisch lesbarer Datenträger mit darauf gespeicherten elektronisch lesbaren Steuerinformationen, welche zumindest ein Computerprogramm nach Anspruch 12 umfassen und derart ausgestaltet sind, dass sie bei Verwendung des Datenträgers in einer elektronischen Recheneinrichtung ein Verfahren nach einem der Ansprüche 1 bis 8 durchführen.
